# EUROPÄISCHE PATENTSCHRIFT

(11) **EP 0 482 046 B1**
(45) Veröffentlichungstag und Bekanntmachung des Hinweises auf die Patenterteilung: **11.05.1994**
(21) Anmeldenummer: 90910694.0
(22) Anmeldetag: 25.06.1990
(51) Int. Cl.: C11D 3/386

(54) **ENZYMATISCHER REINIGER**
ENZYMATIC CLEANER
PRODUIT DE NETTOYAGE ENZYMATIQUE

(30) Priorität: 03.07.1989 DE 3921839
(43) Veröffentlichungstag der Anmeldung: 29.04.1992
(73) Patentinhaber: Henkel Kommanditgesellschaft auf Aktien, 40191 Düsseldorf (DE)
(72) Erfinder: WOLLENWEBER, Horst-Werner, D-4000 Düsseldorf (DE); KRACK, Ralf, D-4000 Düsseldorf (DE)
(86) Internationale Anmeldenummer: EP9001009
(87) Internationale Veröffentlichungsnummer: WO9100333

(56) Entgegenhaltungen:
- WO-A-89/09259
- FR-A- 2 369 338
- GB-A- 2 140 819
- US-A- 3 220 928
- CHEMICAL ABSTRACTS, vol. 112, Nr. 6, 5 February 1990, Columbus, Ohio, USA, ref. Nr. 38787 & JP,A,1265224

## Beschreibung

Die Erfindung betrifft einen enzymatischen Reiniger, der zur Behandlung von Mikrofiltrations- oder Ultrafiltrationsmembranen eingesetzt werden kann und lagerstabil in flüssiger Phase eine Protease und eine Glukanase enthält.

Membranverfahren wie die Ultrafiltration oder Mikrofiltration gewinnen zunehmend an Bedeutung und setzen sich auch in der Lebensmittelindustrie durch. Ein Beispiel dafür ist die Entalkoholisierung von Bier.

Um die Permeabilität der Membranen aufrecht zu erhalten, ist es nötig, sie zu reinigen und Ablagerungen an der Oberfläche oder in den Poren zu entfernen.

Bei derartigen Reinigungsoperationen wurden in der Praxis bereits Protease-Lösungen eingesetzt und diese teilweise mit anderen Reinigern kombiniert. Da es dabei zu Störungen kommen kann und Ausfällungen sich bilden können, bestand der Bedarf nach einem enzymatischen Reiniger, das heißt, nach einem Flüssigkonzentrat, das sowohl Enzyme als auch Tensidbestandteile und gewünschtenfalls Puffer und Komplexbildner enthält.

An ein derartiges Konzentrat werden jedoch hohe Anforderungen bezüglich der Lagerstabilität gestellt.

Die Erfinder haben sich daher die Aufgabe gestellt, eine derartiges Konzentrat bereitzustellen, das außer den Wirkbestandteilen auch Enzymstabilisierungsmittel enthält.

Gegenstand der Erfindung ist daher ein flüssiger, enzymatischer Reiniger enthaltend
- 1.000 bis 90.000 U/ml Protease
- 5 bis 500 BGU/ml Glukanase
- 1 bis 10 Gew.-% anionische und/oder nichtionische Tenside
- 20 bis 60 Gew.-% eines hydrophilen organischen Lösungsmittels
- 1 oder mehrere Säuren des Bors und/oder deren lösliche Salze sowie
- gewünschtenfalls Puffer und/oder Komplexbildner.

Zur Auflösung von Protein-haltigen Ablagerungen enthält das Reinigungsmittel Proteasen. Geeignete Proteasen sind Proteasen vom Subtilisin-Typ, beispielsweise Subtilisin Carlsberg oder Subtilisin BPN'. Auch neutrale Proteasen können eingesetzt werden. Bei Metallo-Proteasen ist darauf zu achten, daß sie nicht gemeinsam mit Komplexbildnern angewendet werden. Die Proteasen werden in solchen Mengen eingesetzt, daß eine Enzymaktivität von 1.000 bis 90.000 U/ml, vorzugsweise 3.000 bis 30.000 U/ml, resultiert (das gereinigte Subtilisin Carlsberg hat als Eiweiß-Körper eine Protease-Aktivität von ca. 2.000.000 U/g).

Die Bestimmung der Proteaseaktivität erfolgte nach der Standard-EPE-Valin-Methode. Die Methode ist beipsielsweise in der deutschen Patentanmeldung DE 37 34 047 beschrieben.

Zur Verhinderung von Ablagerungen von gewissen Polysacchariden enthält der flüssige enzymatische Reiniger eine Glukanase. Die Glukanase wird in Mengen von 5 bis 500 BGU/ml eingesetzt. Als Glukanasen können mit Vorteil Endo-Glukanasen aus Bacillus subtilis eingesetzt werden, die auch noch über eine gewisse unspezifische Amylase-Aktivität verfügen.

Ein geeignetes Handelsprodukt ist beispielsweise das Produkt Cereflo^{R}'' von der Firma Novo Industri AS, Dänemark.

Die Bestimmung der beta-Glukanase wurde nach der Standard-DNS-Methode durchgeführt. Als Substrat wurde eine 1 %ige beta-Glukanlösung (Firma Sigma, Bestell-Nr. G-6513) in 50 mM NaAc-Puffer bei pH 8 verwendet. Die Test-Inkubationszeit betrug 15 Minuten bei 40°C. Die quantitative Bestimmung der reduzierenden Zucker erfolgte im Vergleich zu einer Standardkurve mit Glucose. Die maximale Abweichung zwischen zwei identischen Proben betrug 10% (Standard DNS = Dinitrosalicylsäure-Reagenz).

Die erfindungsgemäßen flüssigen enzymatischen Reiniger erhalten darüberhinaus noch 1 bis 10 Gew.-% anionische und/oder nichtionische Tenside. Dabei ist es bevorzugt vorwiegend oder sogar ausschließlich anionische Tenside einzusetzen. Geeignete anionische Tenside sind Sulfate und/oder Sulfonate von Paraffinen, Fettalkoholen und/oder von Alkylphenolen mit 8 - 12 C-Atomen im vorzugsweise verzweigten Alkylrest. Weiterhin können als anionische Tenside Estersulfate eingesetzt werden und auch die Sulfate von ethoxylierten Alkoholen oder ethoxylierten Phenolen. Unter den Genannten werden derzeit die Paraffin-Sulfonate bevorzugt.

Die erfindungsgemäßen flüssigen enzymatischen Reiniger enthalten weiterhin 20 bis 40 Gew.-% eines hydrophilen organischen Lösungsmittels. Bevorzugte hydrophile organische Lösungsmittel sind ein- oder mehrfunktionelle Alkohole mit bis zu 6 C-Atomen. Unter diesen sind die difunktionellen Alkohole bevorzugt, so etwa Ethylenglykol und insbesondere Propylenglykol (1,2-Propylenglykol). Auch flüssige trifunktionelle Alkohole wie beispielsweise Glycerin können hier eingesetzt werden.

Die erfindungsgemäßen flüssigen enzymatischen Reiniger enthalten weiterhin eine Säure des Bors oder eines ihrer wasserlöslichen Salze. Diese Verbindungen sind bekannte Stabilisatoren für Proteasen und Proteasezubereitungen. Sie haben sich hier überraschenderweise als Stabilisatoren für die Glukanase in Gegenwart der Protease erwiesen. Geeignet sind hier Borsäure und deren wasserlösliche Salze, insbesondere Kalium- oder Natrium- oder Ammoniumborat, aber auch Metaborsäure, Borax oder höher kondensierte Borsäuren wie Pentaborsäure und deren Salze wie Natriumpentaborat oder Kaliumpentaborat.

Die Menge an Säuren des Bors beziehungsweise ihren Salzen beträgt dabei üblicherweise 0,5 bis 5 Gew.-%, bezogen auf das flüssige Reinigungsmittel in Konzentratform.

Die erfindungsgemäßen flüssigen enzymatischen Reiniger werden vorzugsweise auf einen pH-Wert um 7 eingestellt. Das kann durch Zugabe von Alkalien wie Natriumhydroxid erfolgen. Es ist jedoch auch möglich, puffernd wirkende Substanzen zuzugeben. Eingesetzt werden hier die bekannten Puffer-Systeme auf Basis starke Säuren und schwacher Basen beziehungsweise starker Basen und schwacher Säuren, soweit sich mit ihnen ein pH-Wert um 7, also zwischen 5 und 9, bevorzugt zwischen 6 und 8, einstellen läßt. Bevorzugt sind Natrium- beziehungsweise Kaliumsalze der Phosphorsäure. Die puffernden Substanzen können dem flüssigen enzymatischen Reiniger direkt zugegeben werden. Sie können jedoch auch erst in die Reinigungslösung gegeben werden oder vor oder nach der Reinigung getrennt angewendet werden. Dies gilt in gleicher Weise für die Komplexbildner.

Geeignete Komplexbildner, die in den erfindungsgemäßen flüssigen Reinigern mitverwendet werden können, sind Aminocarbonsäuresalze wie die wasserlöslichen Salze der Ethylendiamintetraessigsäure oder der Nitriloessigsäure. Weiterhin können hier auch Phosphonsäuren wie Hydroxy- oder Amino-Alkylen-1,1-Diphosphonsäuren eingesetzt werden. Auch komplexbildende Hydroxycarbonsäuren wie zum Beispiel Citronensäure können eingesetzt werden.

Die erfindungsgemäßen flüssigen enzymatischen Reiniger werden zur Reinigung von Ultrafiltrations beziehungsweise Mikrofiltrationsmembranen eingesetzt. Sie können insbesondere zur Reinigung derartiger Membranen bei der Entalkoholisierung von Bier verwendet werden. Dabei sind die Reiniger mit einer Vielzahl von Membranmaterialien, so zum Beispiel mit Silikonmembranen, Celluloseacetatmembranen, Zirkondioxidmembranen und dergleichen kompatibel.

Außer zum genannten Einsatzzweck können die enzymatischen Reiniger gemäß der Erfindung auch zur Reinigung von Filterpressen und dergleichen eingesetzt werden.

Bei der Anwendung, also etwa zur Reinigung einer Thin-Film-Composite-Membrane, wie sie zur Entalkoholisierung von Bier verwendet wird, wird der enzymatische Reiniger auf eine Anwendungskonzentration von 0,1 bis 1 Gew.-% verdünnt und bei einer Temperatur von z. B. 50 °C während 30 Minuten einwirken gelassen. Dabei kann eine Pufferlösung zur Gewährleistung eines pH-Werts unter Anwendungsbedingungen zugegen sein. Ein günstiger pH-Wert unter Anwendungsbedingungen liegt z.B. bei 8,0 bis 8,5. Gewünschtenfalls folgt auf die enzymatische Reinigung eine saure Reinigung (zum Beispiel 0,3 Gew.-% eines sauren tensidischen Reinigers) und danach, wenn nötig, eine zweite enzymatische Reinigung.

### Beispiele

### Beispiel 1:

Durch Mischen wurden 100 kg eines flüssigen Reinigers hergestellt, die die folgenden Stoffe enthielten:

| | |
|---|---|
| 1,2-Propylenglykol | 40,0 Gew.-% |
| Proteaselösung (Maxatase^{R} flüssig) | 7,5 Gew.-% |
| Glukanaselösung (Cereflo^{R} 200 L, Novo) | 12,5 Gew.-% |
| Paraffinsulfonat 40 Gew.-%ig | 5,0 Gew.-% |
| Borsäure | 0,9 Gew.-% |
| Natronlauge 50 Gew.-%ig | 0,42 Gew.-% |
| NaH₂PO₄ | 0,03 Gew.-% |
| Na₂HPO₄ | 0,094 Gew.-% |

Der Reiniger enthielt ca. 8.500 U/ml Protease und ca. 200 BGU/ml beta-Glukanase.

Durch Zugabe von Natronlauge wurde der pH-Wert des Konzentrates auf 7 eingestellt. Weiterhin wurde eine Pufferlösung hergestellt aus

| | |
|---|---|
| Trikaliumphosphat | 15 Gew.-% |
| Kaliumtripolyphosphat 50 %ig | 20 Gew.-% |
| Kalilauge 45 Gew.-%ig | 28 Gew.-% |
| Trilon^{R}BS | 27 Gew.-% |
| Rest Wasser ad 100 Gew.-% | |

Dieser Puffer setzt den pH der Anwendungslösung auf Werte um 8.

### Beispiel 2:

Zur Reinigung einer Thin-Film-Composite-Membrane, die zur Entalkoholisierung von Bier verwendet wird, wurde zunächst mit Wasser bei 20 °C 5 bis 10 Minuten vorgespült. Dann wurde mit einer 1 %igen Pufferlösung (Beispiel 1 b) und einer 0,3 %igen Reinigerlösung (Beispiel 1 a) bei 50 °C 30 Minuten behandelt. Nach einer Ausspülung mit Wasser (20 °C 5 bis 10 Minuten) wurde 15 Minuten lang bei 50 °C eine 0,3 %ige Lösung eines konventionellen sauren Reinigers eingesetzt. Danach wurde mit Wasser gespült und nochmals mit der erfindungsgemäßen Reinigerlösung und dem Puffer behandelt, worauf dann mit Wasser bei 20 °C nachgespült wurde.

### Beispiel 3:

Die erfindungsgemäße Reinigerlösung wurde einem Lagertest unterzogen. Die Restaktivität der beta-Glukanase betrug nach 3 Monaten um 50 %, verglichen mit 12 % in einem Reiniger, der kein Borat enthielt.

## Patentansprüche

1. Flüssiger, enzymatischer Reiniger enthaltend
- 1.000 bis 90.000 U/ml Protease
- 5 bis 500 BGU/ml Glukanase
- 1 bis 10 Gew.-% anionische und/oder nichtionische Tenside
- 20 bis 60 Gew.-% eines hydrophilen organischen Lösungsmittels
- 1 oder mehrere Säuren des Bors und/oder deren lösliche Salze sowie
- gewünschtenfalls Puffer und/oder Komplexbildner.

2. Enzymatischer Reiniger nach Anspruch 1, dadurch gekennzeichnet, daß als Protease eine Subtilisin-Protease, insbesondere Subtilisin Carlsberg und/oder Subtilisin BPN' vorhanden ist.

3. Flüssiger Reiniger nach einem der Ansprüche 1 oder 2, dadurch gekennzeichnet, daß als Glukanase eine Endo-Glukanase aus Bacillus Subtilis, die gewünschtenfalls eine unspezifische Amylase-Aktivität aufweist, zugegeben ist.

4. Flüssiger enzymatischer Reiniger nach einem der Ansprüche 1 bis 3, dadurch gekennzeichnet, daß als Anion-Tensid Sulfate und/oder Sulfonate von Paraffinen, Fettalkoholen, Alkylphenolen oder von Ethoxylierungsprodukten der beiden letztgenannten zugegen sind.

5. Flüssiger enzymatischer Reiniger nach einem der Ansprüche 1 bis 4, dadurch gekennzeichnet, daß als hydrophiles Lösungsmittel ein ein- oder mehrfunktioneller Alkohol mit bis zu 6 C-Atomen, insbesondere aber 1,2-Propylenglykol vorhanden ist.

6. Enzymatischer Reiniger nach einem der Ansprüche 1 bis 5, dadurch gekennzeichnet, daß Borsäure, deren Natrium- oder Kaliumsalze, Borax oder Salze der Penta-Borsäure vorhanden sind.

7. Enzymatischer Reiniger nach einem der Ansprüche 1 bis 6, dadurch gekennzeichnet, daß als Puffer Salze der Phosphorsäure eingesetzt werden.

8. Enzymatischer Reiniger nach einem der Ansprüche 1 bis 7, dadurch gekennzeichnet, daß als Komplexbildner Aminocarbonsäuren wie Ethylendiamintetraessigsäure oder Nitriloessigsäure, Phosphonsäuren oder Hydroxycarbonsäuren eingesetzt werden.

9. Verwendung eines enzymatischen Reinigers nach den Ansprüchen 1 bis 8 zur Behandlung von Mikro- oder Ultrafiltrationsmembranen, insbesondere in der Lebensmittelindustrie.

## Claims

1. A liquid enzymatic cleaner containing
- 1,000 to 90,000 U/ml protease
- 5 to 500 BGU/ml glucanase
- 1 to 10% by weight anionic and/or nonionic surfactants
- 20 to 60% by weight of a hydrophilic organic solvent
- one or more acids of boron and/or soluble salts thereof and
- If desired, buffers and/or complexing agents.

2. An enzymatic cleaner as claimed in claim 1, characterized in that a subtilisin protease, more particularly subtilisin Carlsberg and/or subtilisin BPN', is present as the protease.

3. A liquid cleaner as claimed in claim 1 or 2, characterized in that an endoglucanase from Bacillus subtilis, which if desired has a non-specific amylase activity, is present as the glucanase.

4. A liquid enzymatic cleaner as claimed in any of claims 1 to 3, characterized in that sulfates and/or sulfonates of paraffins, fatty alcohols, alkylphenols or of ethoxylation products of the last two are present as the anionic surfactant.

5. A liquid enzymatic cleaner as claimed in any of claims 1 to 4, characterized in that a monohydric or polyhydric alcohol containing up to 6 carbon atoms, but especially 1,2-propylene glycol, is present as the hydrophilic solvent.

6. An enzymatic cleaner as claimed in any of claims 1 to 5, characterized in that boric acid, sodium or potassium salts thereof, borax or salts of pentaboric acid are present.

7. An enzymatic cleaner as claimed in any of claims 1 to 6, characterized in that salts of phosphoric acid are used as buffers.

8. An enzymatic cleaner as claimed in any of claims 1 to 7, characterized in that aminocarboxylic acids, such as ethylenediamine tetraacetic acid or nitriloacetic acid, phosphonic acids or hydroxycarboxylic acids are used as complexing agents.

9. The use of the enzymatic cleaner claimed in claims 1 to 8 for the treatment of microfiltration or ultrafiltration membranes, particularly in the food industry.

## Revendications

1. Nettoyant liquide enzymatique contenant :
- 1.000 à 90.000 U/ml de protéase
- 5 à 500 BGU/ml de glucanase
- 1 à 10 % en poids de tensioactif anionique et/ou non ionique,
- 20 à 60 % en poids d'un solvant organique hydrophile
- 1 ou plusieurs acides dérivés du bore'et/ou leurs sels solubles ainsi que,
- si c'est souhaité du tampon et/ou un formateur de complexe.

2. Nettoyant enzymatique selon la revendication 1, caractérisé en ce qu'on utilise comme protéase une protéase subtilisine, notamment la subtilisine Carlsberg et/ou la subtilisine BPN'.

3. Nettoyant liquide selon l'une des revendications 1 ou 2, caractérisé en ce qu'on ajoute comme glucanase une endo-glucanase de bacillus subtilis, qui présente si c'est souhaité, une activité amylase non spécifique.

4. Nettoyant enzymatique liquide, selon l'une des revendications 1 à 3, caractérisé en ce qu'on ajoute comme tensioactif anionique des sulfates et/ou sulfonates de paraffine, d'alcool gras, d'alkylphénols ou de produits d'éthoxylation des deux derniers composes cités.

5. Nettoyant enzymatique liquide selon l'une des revendications 1 à 4, caractérisé en ce qu'on ajoute comme solvant hydrophile un mono ou polyalcool ayant jusqu'à 6 atomes de C, mais notamment du 1,2-propylèneglycol.

6. Nettoyant enzymatique selon l'une des revendications 1 à 5, caractérisé en ce que sont présents de l'acide borique, ses sels de sodium ou de potassium, du borax ou des sels de l'acide pentaborique.

7. Nettoyant enzymatique selon l'une des revendications 1 à 6, caractérisé en ce qu'on utilise comme tampon des sels d'acide phosphorique.

8. Nettoyant enzymatique selon l'une des revendications 1 à 7, caractérisé en ce qu'on utilise comme formateurs de complexes des acides aminocarboxyliques tels que l'acide éthylène-diaminetétraacétique ou l'acide nitriloacétique, des acides phosphoniques ou des acides hydroxycarboxyliques.

9. Utilisation d'un nettoyant enzymatique selon les revendications 1 à 8, pour traiter des membranes de micro ou ultrafiltration, notamment dans l'industrie alimentaire.
